## Europäisches Patentamt
## European Patent Office
## Office européen des brevets

(11) Publication number: **0 205 431**
**B1**

---

(12) **EUROPEAN PATENT SPECIFICATION**

(45) Date of publication of patent specification: **17.05.89**

(51) Int. Cl.⁴: **A 01 J 7/00, A 01 J 5/16**

(21) Application number: **85900829.4**

(22) Date of filing: **06.02.85**

(86) International application number:
**PCT/SE85/00058**

(87) International publication number:
**WO 85/03410 15.08.85 Gazette 85/18**

---

(54) **MILKING MEANS.**

---

(30) Priority: **10.02.84 SE 8400704**

(43) Date of publication of application:
**30.12.86 Bulletin 86/52**

(45) Publication of the grant of the patent:
**17.05.89 Bulletin 89/20**

(84) Designated Contracting States:
**DE FR GB NL SE**

(56) References cited:
**DK-B- 13 614**
**FR-C-1 138 676**
**SE-B- 26 015**
**SE-B- 135 619**

(73) Proprietor: **ALFA-LAVAL AGRI INTERNATIONAL AB**
**Farm Center P.O. Box 39**
**S-147 00 Tumba (SE)**

(72) Inventor: **WAHLSTRÖM, Lennart**
**Blockvägen 13**
**S-147 00 Tumba (SE)**
Inventor: **MAYNTZ, Michael**
**Sofieberg**
**S-150 16 Hölö (SE)**

(74) Representative: **Lerwill, John et al**
**A.A. Thornton & Co. Northumberland House**
**303-306 High Holborn**
**London, WC1V 7LE (GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a milking apparatus for milking an animal having an udder with downwardly extending teats, the apparatus including a plurality of teat cups, each having necessary connections for the milking function.

Known milking apparatus normally includes a so-called milk claw which is positioned close to and beneath the teat cups and which is connected to the teat cups via their milk tubes and the pulsation tubes. The length of the milk tube between the teat cup and the milk claw usually is about 15 cm. Milking means, which comprise the four teat cups and which are hanging from a point above the udder of the animal, are known (GB-C-545292).

An essential drawback with the known arrangements is that the milker must use both his hands when applying the teat cups onto the teats. As a rule, this is done by the milker holding up the milk claw with one hand and applying the teat cup onto the teat with his other hand. Both arms need to be outstretched in front of his body.

This working procedure has been thoroughly studied by Professor J. Ekholm et al in the Caroline Institute of Sweden. The study of Mr. Ekholm comprises the load on the motion organs of the milker. Due to the working position there arise great moments in several of the joints of the body. By always having a certain working position at each cow being milked and having the milking work each day of the year, this can lead to wear and fatigue of the joint surfaces. The opinion of Ekholm is that this phenomenon can be critical and lead to or make already existing artroses and other joint troubles worse in the neck region, back, hips and knees. When milking in two planes, the load on knees, hips and loin back is reduced but is rather increased in the neck and shoulders. The opinion of Ekholm that the load can be critical is supported by a high frequency among milkers of the conditions mentioned among milkers.

Another drawback with known procedure is an uneven pull to control on the teats of the cow which is difficult to control. Due to the fact that the milk tubes and pulsation tubes leading from the teat cup to the milk claw have a certain stiffness, the centre of gravity of the parts included in the system are necessarily distributed more or less unevenly on the teats. This has the consequence that the udder will not be completely milked out which leads to a low milk production of the cow.

A third drawback is that the milk tube and normally also the pulsation tube are fastened to the teat cup in such a way that when the teat cups hang freely from the milk claw, the teat cups are directed downwards. This has the grave disadvantage that under unfavourable circumstances the teat cup can fall down onto the floor and suck up dirty particles and other things.

In accordance with the present invention there is provided a milking apparatus for milking an animal having an udder with downwardly extending teats comprising a plurality of teat cups for application to respective teats with flexible members connected to the teat cups and extending upwardly therefrom so as to suspend them, each teat cup having necessary connections for the milking function, characterised in that the flexible members are arranged to suspend the teat cups independently of each other from a level above the teat base of the udder of the animal, for each teat cup to hang freely ready to be applied to a teat.

With such an apparatus each teat cup will hang freely, whereby the milker does not need to lift all the teat cups inclusive the milk claw when putting a teat cup onto the teat, as has been the case hitherto. Instead the milker needs only to lift each teat up with one arm.

That means a consideration reduction in the load on the motion organs of the body according to calculations made. For the neck region the load will be reduced by about 50% and for the loin back and the hip joint the reduction of the load for one planemilking will be about 15%.

Due to the fact that each teat carries the weight of its own teat cup with tubes but cannot be influenced by the remaining parts of the milking equipment, the weight of the milking means will be evenly distributed on the teats and always of equal size, even on cows having only three teats.

A better understanding of the invention will be had from the following detailed description of some embodiments, reference being made to the accompanying drawings, in which:

Figures 1-5 are schematic side views showing five different embodiments of milking apparatus for milking cows; and

Figures 6-10 show five different forms of the teat cup which can be used in the milking apparatus according to Figures 1-5.

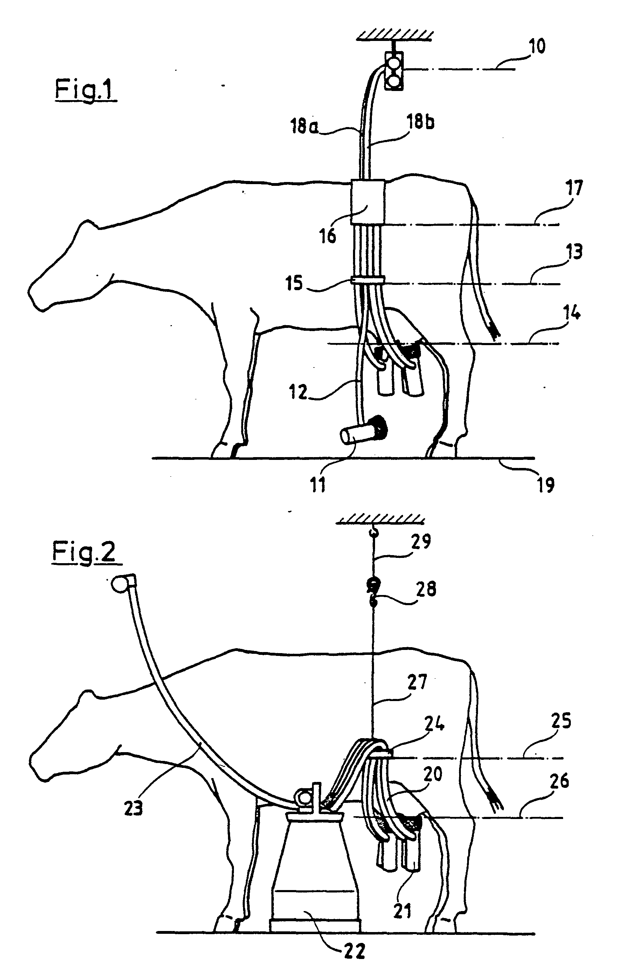

Referring now to Figure 1 there is shown a milking apparatus connected to the milking system at a position on a level 10, preferably straight above the udder of the cow. The milking means comprises four teat cups 11 with respective tubes 12, each teat cup 11 hanging on its own tube 12, independently of the remaining teat cups, from a position at level 13 which is above the level 14 of the teat base of the udder of the cow. The level 13 can be defined by the location of a mechanical collecting point for the tubes or a collecting point for the flow streaming through the tubes. This collecting point can be between the level 14 and the level 10 at which the milking means is connected with the usual central lines for vacuum and milk. The mechanical collecting point can be a collecting means 15, where the tubes for vacuum and milk from the teat cups are secured together. Such a collecting means can be displaced up and down for changing the level 13.

A collecting point for the flow can be a device 16, to which the tubes from the teat cups are connected. This collecting point can be positioned on the level 10 but is more usually on a lower level 17. In this later case a single milk line 18a and a single vacuum line 18b lead from the device 16 on the level 17 to the central lines for milk and vacuum on the level 10. Thus, according to the Figures 1 there are two collecting points for the tubes, one on the level 13 and other on the level 17. It is, however, not necessary to have two collecting points for the tubes, and only one could be sufficient.

Since it is usual for there to be one milk tube and one pulsation tube leading to each teat cup, the reference number 12 should be understood to denote both tubes.

In an inoperative position the teat cups are positioned beside the cow and beneath the udder of the cow. The length of the tubes and their connection to the teat cups are such that the teat cups will hang in an essentially horizontal position a short distance above the floor 19 of the cow compartment, whereby there is no risk of the teat cups sucking up dirty particles and other things from the floor 19 of the cow compartment.

Thanks to this positional arrangement of the tubes and the teat cups, it will be very easy to apply the teat cups on the teats when required. Thus, each teat cup can be applied onto the teat in a simple manual operation, which means that the milker can apply two teat cups onto respective teats simultaneously.

In Figure 2 there is shown another embodiment of the invention. The tubes 20 lead from the teat cups 21 to a milk churn 22 which is connected with a vacuum line via a tube 23. The tubes 20 are held together in a collecting means 24 on a level 25 which is above the level 26 of the teat base of the udder of the cow. The collecting means 24 is held in position beside and close to the cow by means of a band, wire or a similar suspension element 27, one end of which is fastened to the collecting means 24 and the other end of which is fastened to a hook 28 attached to a wire 29 hanging down from the roof of the cow compartment.

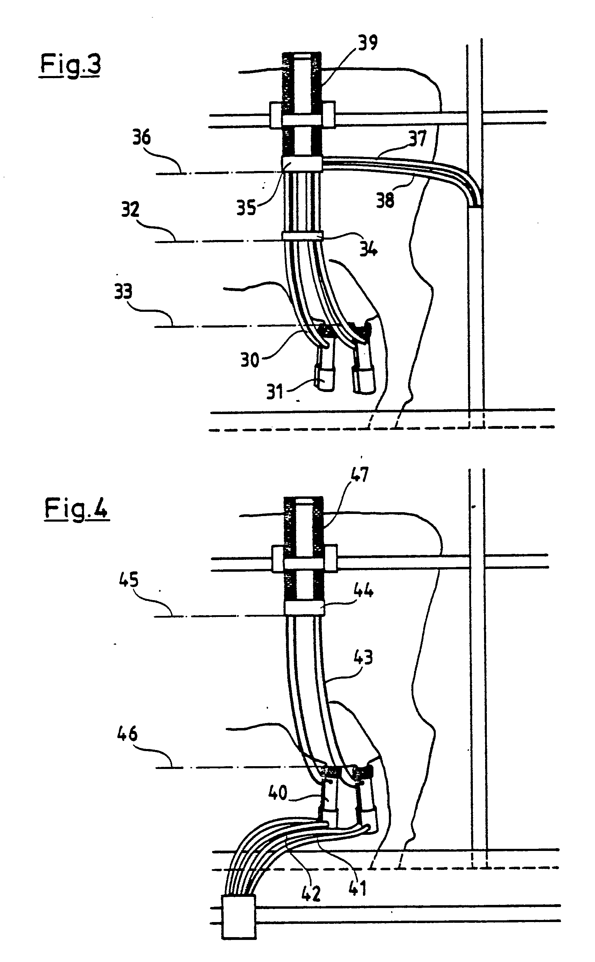

In Figure 3 there is shown a third embodiment of the invention. This embodiment has certain similarities with that according to Figure 1. Thus, the milking and pulsation tubes 30 from the teat cups 31 are brought together by a collecting means 34 at a first collecting point on a level 32 above the level 33 of the teat base of the cow. From the collecting means 34 all the tubes extend to a second collecting point for the flow which is formed by a collecting device 35 on a level 36 above the level 32. From this collecting device 35 a single milk tube 37 and a single vacuum tube 38 lead to the central lines of the milking system.

The level 36 of the collecting device 35, and hence the distance between the teat cups in their nonoperative position and the floor of the cow compartment, can be changed by adjusting upwards or downwards the device 39, to which the collecting device is fastened.

In Figure 4 there is shown a fourth embodiment of the invention. This embodiment has each of the teat cups 40 provided with connections at its lower part for one end of a milk tube 41 and of a pulsation tube 42. The other ends of the tubes are connected to the central milk line and the central vacuum line under the floor of the cow compartment.

In a non-operative position the teat cups are held in position for application onto the teats by means of wires 43, the lower ends of which are fastened to the teat cups and the upper ends of which are fastened to a collecting means 44, positioned on a level 45 above the level 46 of the teat base of the cow. The means 44 is fastened to a device 47 by which the level 45 of the collecting means and hence the position of the teat cups 40 in non-operative situation, can be adjusted upwards or downwards.

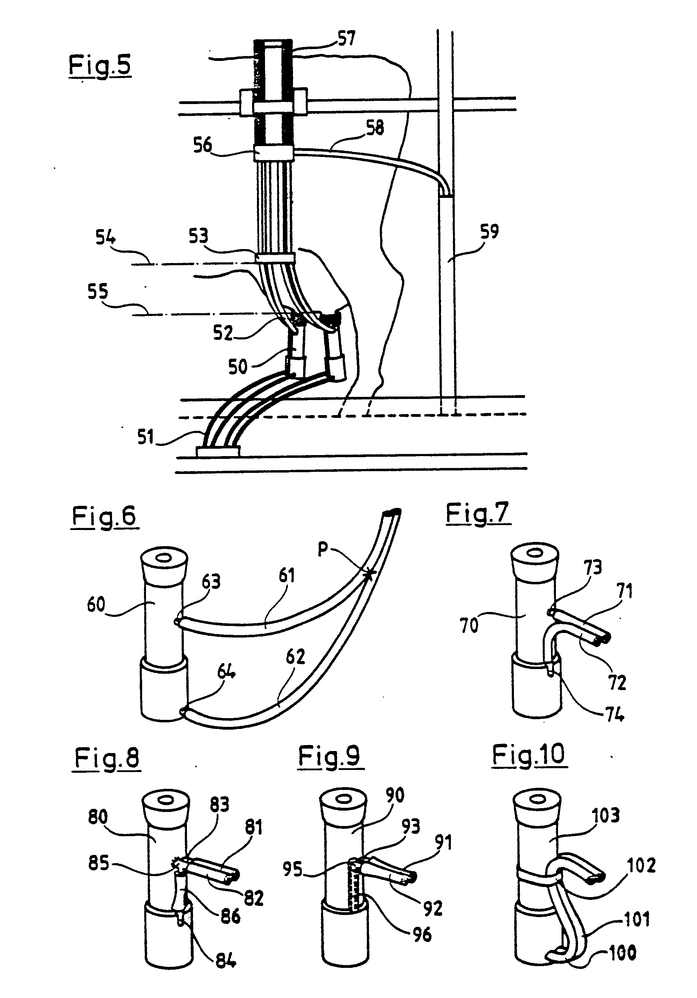

In Figure 5 there is shown a modification of the embodiment according to Figure 4. In Figure 5 the milk tubes 51 are fastened to the teat cups 50 at the lower parts of the teat cups and bring the milk from the teat cups to a central milk line under the floor of the cow compartment. The pulsation tubes 52 are fastened to the teat cups at such a level that in the non-operative position the teat cups can hang on the tubes 52 in an essentially horizontal position. The pulsation tubes 52 extend upwardly from the teat cups 50 and are held together by a collecting means 53 positioned on a level 54 above the level 55 of the teat base of the cow. The tubes 52 extend upwardly from the collecting means 53 to another collecting device 56 fastened to a device 57 which is vertically adjustable. From the collecting device 56 one vacuum line 58 leads through a conduit 59 to the central vacuum line under the floor of the cow department.

The described collecting means which can be displaced along the tubes is suitably a piece of plastics material provided with a hole for each tube to pass through.

Common to all five embodiments of the milking means is the feature that when the teat cups are in position ready for application onto the teats of the cow, the teat cups are hanging beside the cow and are in an essentially horizontal position above but close to the floor of the cow compartment so that with a single handed manual operation each teat cup can be applied onto the teats of the cow.

Referring now to Figures 6 to 10 there are shown different forms of the teat cups which can be used in the milking means according to Figures 1-5. Thus, in Figure 6 there is shown a teat cup 60 comprising a casing inside which is attached a teat cup liner and which casing is connected with a pulsation tube 61 and a milk tube 62. The pulsation tube 61 is connected to the teat cup casing by a tubular nipple 63 at a point on or near the centre of gravity of the teat cup, while the milk tube 62 is fastened onto a second tubular nipple 64 which is perpendicular to the teat cup 60. The milk tube 62 is arranged in such a way that it extends independently from the teat cup and joins the pulsation tube at a point P a certain distance from the teat cup, from which point the tubes 61, 62 extend together. The pulsation tube 61 has a length which is essentially less than that of the milk tube 62. Due to this arrangement and the fact that the pulsation tube is applied to a point on or near the centre of gravity of the teat cup, the teat cup assumes an essentially horizontal position when it is removed from the teat. In this way there is eliminated any risk that the teat cup head will be directed towards the floor and be able to suck up dust particles and dirty particles in the milk line. In Figure 7 there is shown another teat cup which differs from that according to Figure 6 in that the milk tube 72 extends along the outside of the teat cup wall up to the connecting place of the pulsation tube 71, wherefrom the two tubes extend together. In this connection, as in the embodiment according to Figure 6 the pulsation tube 71 is applied onto a nipple 73 which is perpendicularly to the teat cup casing 70. The milk tube 72, however, is attached, to a tubular nipple 74 which is attached to the teat cup 70 in the lower part of the same and extends essentially parallel with the longitudinal direction of the teat cup.

In Figures 8 and 9 there are shown modifications of the teat cup according to Figure 7. In each case a tubular nipple 83; 93 for the pulsation tube 81; 91, is fastened to the teat cup casing 80; 90 in the same way as in Figures 6 and 7. The connection of the milk tube 82; 92 to the teat cup casing 80; 90, however, differs from that according to Figures 6 and 7.

According to Figure 8 the milk tube 82 is fastened onto a nipple 85 which consists of an angular pipe secured to the outer wall of the teat cup casing 80. Furthermore, another tubular nipple 84 is fastened to the lower part of the teat cup in the same way as in Figure 7. Between the nipples 84 and 85 there is applied a tube 86 connecting these two nipples.

In Figure 9 the milk tube 92 is connected to a nipple 95 being an integral part of a pipe 96 which is secured the outside of the teat cup casing 90. Instead of being an integral part of the pipe 96, the nipple 95 can be a separate part fastened to the pipe 96. The pipe 96 has connection with the inner part of the teat cup liner and accordingly can conduct milk from the teat cup to the milk tube 92. The pipe can either be an integral part of the teat cup 90 or a separate part fastened to the teat cup along its length. The nipple 95 onto which the milk tube is fastened is preferably positioned on the teat cup casing at the same level as close to the nipple 93 for the pulsation tube 91. This has the consequence that the pulsation tube 91 and the milk tube 92 can be close to each other and have a common extension from the teat cup 90. This fact plus the fact that the milk line at the teat cup consists of a pipe 96 extending along the teat cup wall, has the consequence that the teat cup according to Figure 9 is very robust, compact and easy to handle.

Another possible construction is that the milk line at the teat cup, i.e. that part of the line positioned between the teat cup liner and a nipple for the milk tube located as in Figures 8 and 9, is positioned inside the teat cup casing.

In Figure 10 there is shown a further embodiment of the teat cup. Both the milk tube 100 and the pulsation tube 101 are fastened to the lower part of the teat cup, i.e. essentially below the centre of gravity. In order to be able to have the teat cup in an essentially horizontal position when hanging ready for application onto the teat. The tubes need to extend essentially from the centre of the gravity of the teat cup. For that purpose the teat cup is provided with a band 102 which extends around the teat cup body 103 and the two tubes 100, 101.

The advantage with this and the previously described teat cups are that they are very simple to handle. Since the connection between the milk and pulsation tubes and the teat cup is approximately at the centre of the gravity, the teat cups will hang essentially horizontally. Moreover, there will be a good space to accommodate the hand of the milker above the connections for gripping the teat cup at its upper part and to apply it onto the teat of the cow. Another advantage is that the moment on the teat due to any pulling force in the tubes is reduced because the connection between the tubes and the teat cups is closer to the teat than in known teat cups.

When describing the embodiments according to Figures 6-10 we have stated that it is advantageous if the connections between the tubes and the teat cups are made in such a way that the teat cup will hang essentially horizontally. That means that the connection between the tubes and teat cup could be somewhat below the centre of gravity without leaving the basic idea of the invention, which is that the teat cups shall be so supported and positioned close to the cow, that each teat cup can be applied onto the teat of the animal by a simple one handed operation of the milker.

## Claims

1. A milking apparatus for milking an animal having an udder with downwardly extending teats comprising a plurality of teat cups (11; 21; 31; 40; 50) for application to respective teats with flexible members (12; 20; 30; 43; 52) connected to the teat cups and extending upwardly therefrom so as to suspend them, each teat cup having necessary connections for the milking function, characterised in that the flexible members are arranged to suspend the teat cups independently of each other from a level (13; 25; 32; 45; 54) above the teat base (14; 26; 33; 46; 55) of the udder of the animal, for each teat cup to hang freely ready to be applied to a teat.

2. A milking apparatus according to claim 1, wherein each teat cup is connected to a milk tube and a pulsation tube, and said flexible members are constituted by said tubes.

3. A milking apparatus according to claim 1, wherein each teat cup is connected to a milk tube (51) and a pulsation tube (52), and said flexible members are constituted by said pulsation tubes (52).

4. A milking apparatus according to any of claims 1 to 3, wherein said flexible members are collected and held together at said level (13; 25; 32; 45; 54) by a mechanical element (15; 24; 34; 53).

5. A milking apparatus according to claim 4, wherein said mechanical element is adjustable upwardly and downwardly to vary said level.

6. A milking apparatus according to claim 5, wherein the mechanical element is intermediate the ends of the flexible members and is adjustable therealong.

7. A milking apparatus according to claim 1, wherein the flexible members are wires (43).

8. A milking apparatus according to claim 5, 6 or 7, wherein the flexible members have upper ends connected to a common device (16; 35; 44; 56) and said device is supported for adjustment upwardly and downwardly for varying said level (13; 32; 45; 54).

9. A milking apparatus according to claim 4, 5 or 6, wherein said mechanical element (24) is attached to a suspension wire (27) coupled to a stationary support.

10. A milking apparatus according to claim 1 or 2, wherein each tube constituting a flexible member is connected to the teat cup at or close to the centre of gravity of the cup so that the teat cups are essentially horizontal when hanging freely.

**Patentansprüche**

1. Melkapparat zum Melken eines Tieres, welches ein Euter mit nach unten sich erstreckenden Zitzen besitzt, mit einer Mehrzahl von Zitzenbechern (11; 21; 31; 40; 50) zur Anbringung an den jeweiligen Zitzen, mit flexiblen Teilen (12; 20; 30; 43; 52), die mit den Zitzenbechern verbunden sind und sich von diesen nach oben erstrecken, um sie aufzuhängen, wobei jeder Zitzenbecher die notwendigen Verbindungen für die Melkfunktion hat, dadurch gekennzeichnet, daß die flexiblen Teile so angeordnet sind, daß sie die Zitzenbecher unabhängig voneinander von einem Niveau (13; 25; 32; 45; 54) aufhängen, welches oberhalb der Zitzenbasis (14; 26; 33; 46; 55) des Euters des Tieres angeordnet ist, damit jeder Zitzenbecher frei hängen kann in Bereitschaft zur Anbringung an einer Zitze.

2. Melkapparat nach Anspruch 1, dadurch gekennzeichnet, daß jeder Zitzenbecher mit einem Milchschlauch und einem Pulsschlauch verbunden ist, wobei die flexiblen Teile von diesen Schläuchen gebildet werden.

3. Melkapparat nach Anspruch 1, dadurch gekennnzeichnnet, daß jeder Zitzenbecher mit einem Milchschlauch (51) unnd einem Pulsschlauch (52) verbunnden ist und die flexiblen Teile durch die Pulsschläuche (52) gebildet werden.

4. Melkapparat nach einem der Ansprüche 1 bis 3, dadurch gekennzeichnet, daß die flexiblen Teile durch ein mechanisches Element (15; 24; 34; 53) auf dem genannten Niveau (13; 25; 32; 45; 54) zusammengefaßt und gehalten werden.

5. Melkapparat nnach Anspruch 4, dadurch gekennzeichnet, daß das mechanische Element aufwärts und abwärts einstellbar ist, um das Niveau zu verändern.

6. Melkapparat nach Anspruch 5, dadurch gekennzeichnet, daß das mechanische Element zwischen den Enden der flexiblen Teile angeordnet ist und dort längsverschieblich einstellbar ist.

7. Melkapparat nach Anspruch 1, dadurch gekennzeichnet, daß die flexiblen Teile Drähte (43) sind.

8. Melkapparat nach Anspruch 5, 6 oder 7, dadurch gekennzeichnet, daß die flexiblen Teile obere Enden haben, die mit einer gemeinsamen Vorrichtung (16; 35; 44; 56) verbunden sind und daß diese Vorrichtung nach oben und nach unten einstellbar aufgehängt ist zum Verändern des Niveaus (13; 32; 45; 54).

9. Melkapparat nach Anspruch 4, 5 oder 6, dadurch gekennzeichnet, daß das mechanische Element (24) an einem Aufhängedraht (27) befestigt ist, der mit einer stationären Stütze verbunden ist.

10. Melkapparat nach Anspruch 1 oder 2, dadurch gekennzeichnet, daß jeder ein flexibles Teil bildende Schlauch mit dem Zitzenbecher am Schwerpunkt oder in der Nähe des Schwerpunktes des Bechers verbunden ist, so daß die Zitzenbecher im wesentlichen horizontal sind. wenn sie frei hängen.

**Revendications**

1. Dispositif de traite pour traire un animal ayant un pis à trayons s'étendant vers le bas, comprenant plusieurs gobelets trayeurs destinés à être appliqués aux trayons respectifs, avec des organes flexibles (12; 20; 30; 43; 52) reliés aux gobelets trayeurs et s'étendant vers le haut à partir de ceux-ci de manière à les suspendre, chaque gobelet trayeur présentant les connexions nécessaires à l'opération de traite, caractérisé en ce que les organes flexibles sont disposés de manière à suspendre les gobelets trayeurs indépendamment les uns des autres à partir d'un niveau (13; 25; 32; 45; 54) situé au-dessus de la base (14; 26; 33; 46; 55) du trayon du pis de l'animal, de façon que chaque gobelet trayeur soit suspendu librement et soit prêt à être appliqué au trayon.

2. Dispositif de traite selon la revendication 1, dans lequel chaque gobelet trayeur est relié à un tube à lait et à un tube à pulsations, et lesdits organes flexibles sont constitués par lesdits tubes.

3. Dispositif de traite selon la revendication 1, dans lequel chaque gobelet trayeur est relié à un tube à lait (51) et à un tube à pulsations (52), et lesdits organes flexibles sont constitués par lesdit tubes à pulsations (52).

4. Dispositif de traite selon l'une quelconque des revendications 1 à 3, dans lequel lesdits organes flexibles sont rassemblés et maintenus ensemble audit niveau (13; 25; 32; 45; 54) par un élément mécanique (15; 24; 34; 53).

5. Dispositif de traite selon la revendication 4, dans lequel ledit élément mécanique peut être réglé vers le haut et vers le bas pour modifier ledit niveau.

6. Dispositif de traite selon la revendication 5, dans lequel l'élément mécanique est situé entre les extrémités des organes flexibles et est réglable le long de ceux-ci.

7. Dispositif de traite selon la revendication 1, dans lequel les organes flexibles sont des fils (43).

8. Dispositif de traite selon la revendication 5, 6 ou 7, dans lequel les organes flexibles ont leurs extrémités supérieures reliées à un dispositif commun (16; 35; 44; 56) et ledit dispositif est supporté de façon à être ajusté vers le haut et vers le bas pour modifier ledit niveau (13; 32; 45; 54).

9. Dispositif de traite selon la revendication 4, 5 ou 6, dans lequel ledit élément mécanique (24) est fixé à un fil de suspension (27) relié à un support fixe.

10. Dispositif de traite selon la revendication 1 ou 2, dans lequel chaque tube constituant un organe flexible est relié au gobelet trayeur au niveau ou près du centre de gravité du gobelet de manière que les gobelets trayeurs soient sensiblement horizontaux quand ils pendent librement.

Fig.1

Fig.2

1

Fig.3

Fig.4

Fig.5

Fig.6

Fig.7

Fig.8

Fig.9

Fig.10

3